# EUROPÄISCHE PATENTANMELDUNG

(11) **EP 4 414 336 A1**
(43) Veröffentlichungstag der Anmeldung: **14.08.2024**
(21) Anmeldenummer: 24156323.8
(22) Anmeldetag: 07.02.2024
(51) Int. Cl.: C04B 11/26, C04B 18/04, C04B 20/02

(54) **VERWERTUNG VON BEIPRODUKTEN DER LITHIUMHERSTELLUNG**

(30) Priorität: 07.02.2023 EP 23155277
(71) Anmelder: ITEL Deutsches Lithiuminstitut GmbH, 06108 Halle (Saale) (DE); SCHWENK Zement GmbH & Co. KG, 89077 Ulm (DE); Rocktech Lithium Consulting GmbH, 40882 Ratingen (DE); Papenburg Entsorgung Ost GmbH, 06112 Halle (Saale) (DE)
(72) Erfinder: Neumann, Thomas, 97753 Karlstadt (DE); Möller, Hendrik, 89604 Allmendingen (DE); Locher, Georg, 59302 Oelde (DE); Adorni, Martin, 45468 Mülheim an der Ruhr (DE); Heilmann, Andreas, 04288 Leipzig (DE); Woskowski, Julia, 06110 Halle (Saale) (DE); Neumann, Andreas, 91338 Igensdorf (DE); Wehrspohn, Ralf B., 25849 Pellworm (DE)
(74) Vertreter: dompatent von Kreisler Selting Werner - Partnerschaft von Patent- und Rechtsanwälten mbB

(57) **Zusammenfassung**

Verfahren zur Herstellung eines Zementzusatzstoffs umfassend die Schritte:
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Verwenden der Festphase als Zementzusatzstoff.

## Beschreibung

Die vorliegende Erfindung betrifft ein Verfahren zur Herstellung eines Zementzusatzstoffs, den Zementzusatzstoff und seine Verwendung.

Lithium ist ein wichtiger Rohstoff, insbesondere im Bereich von Batterien. Jährlich werden aktuell ca. 80.000 Tonnen produziert.

Wirtschaftlich verwertbare Vorkommen umfassen sowohl Pegmatite als auch Salzseen.

In Pegmatiten kommt Lithium kommt typischerweise vergesellschaftet mit Silikaten vor, beispielsweise als Spodumen, Petalit, Zinnwaldit, Lepidolith usw.

Es sind eine Vielzahl von Aufarbeitungsverfahren bekannt. Typische Schritte umfassen das
- Brechen und Mahlen des Erzes,
- eine Hitzebehandlung, um Alpha-Spodumen in offenporigen Beta-Spodumen umzuwandeln,
- eine Auslaugung mit konzentrierter Schwefelsäure, um einen Ionenaustausch im Erz zu erreichen, wobei das Lithium im Erz gegen Wasserstoffionen ausgetauscht und die Lithiumionen in die konzentrierte Schwefelsäure übergehen
- Neutralisation mit Calciumhydroxyd oder Calciumcarbonat
- Filtration, um die lithiumhaltige Lösung abzutrennen
- Aufreinigung der Lithiumlösung.

Aus den Lithiumlösungen können Lithiumsalze durch verschiedene weitere Fällung mit Calciumhydroxiden, Natriumcarbonaten, Natriumhydroxiden, Bariumhydroxiden etc. erhalten werden. Typische Endprodukte sind dann Lithiumcarbonat und Lithiumhydroxide, die so das übliche Handelsprodukt von Lithium sind.

Der Niederschlag, der durch die Filtration nach der Neutralisation erhalten wird, wird auch als "Lithium Slag" ("LS") bezeichnet. Bei der Herstellung von einer Tonne Lithiumcarbonat fallen 8 bis 10 Tonnen LS an, bei einer Tonne Lithiumhydroxid sogar 20 bis 40 Tonnen LS. LS wird in vielen Fällen deponiert. Es ist auch versucht worden, LS zur Wiederauffüllung von Lagerstätten nach dem Abbau zu verwenden, als so genannter Versatz.

Yan He et al. beschreiben im Journal of Environmental Management 248 (2019) 109282 beispielsweise wie Lithium Slag mit Flugasche und Portland-Zement vermischt wird, um im Bergwerk verfüllt zu werden.

Lithium Slag hat auf die Eigenschaften des Zementes eher negative Einflüsse wie Mengyi Zhai et al. im Journal of Building Engineering 39 (2021) 102287 zeigen, weil es die Festigkeit des Betons verringert.

Aus der Fällung mit Calciumsalzen enthält Lithium Slag auch hohe Mengen an Gips, allerdings konnte LS aufgrund der Beimengung weiterer Inhaltsstoffe auch nicht als Gipsquelle sinnvoll verwertet werden.

Aufgabe der vorliegenden Erfindung war es, die weiteren Inhaltsstoffe von Lithiumerzes einer sinnvollen Verwertung zuzuführen.

Gelöst wird die Aufgabe durch ein Verfahren zur Herstellung eines Zementzusatzstoffs umfassend die Schritte:
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Verwenden oder Bereitstellen der Festphase als Zementzusatzstoff.

Erfindungsgemäß wird ein Lithiumerz bereitgestellt. Lithiumerze sind häufig Mischungen verschiedenster Mineralien. Geeignet sind insbesondere Pegmatite. Typische enthaltene Mineralien sind Spodumen, Petalit, Zinnwaldit, Lepidolith oder Mischungen davon. Das Lithiumerz kann bereits einer Vorbehandlung unterzogen worden sein und beispielsweise ein Erzkonzentrat sein.

Das Lithiumerz wird mit konzentrierter Schwefelsäure bei Temperaturen zwischen 200 und 330 °C versetzt, wodurch eine Mischung erhalten wird. Üblicherweise wird bei der Behandlung des Lithiumerzes mit Schwefelsäure mehr Schwefelsäure eingesetzt, als stöchiometrisch erforderlich wäre, um eine möglichst vollständige Freisetzung des Lithiums im Lithiumerz zu erreichen. Häufig hat das mit Schwefelsäure versetzte Erz eine pastöse Konsistenz.

Im nächsten Schritt erfolgt die Zugabe von Wasser. Die Mischung von Erz, Schwefelsäure und Wasser wird typischerweise eine Zeitlang gerührt, wodurch eine Suspension erhalten wird. Die Wasserzugabe erfolgt typischerweise so, dass die Lösung pumpbar wird.

Wie im Stand der Technik erfolgt durch die Zugabe von Schwefelsäure und anschließend Wasser ein Austausch der Lithiumionen gegen Protonen im Mineral, dieser Schritt wird auch als (Aus-)Laugung bezeichnet.

Dann erfolgt die Abtrennung des Feststoffes aus der Suspension. Dieser Feststoff enthält chemisch zum einem großen Anteil Aluminiumoxide und Silikate. Überraschenderweise kann dieser Feststoff direkt oder nach weiteren Behandlungsschritten als Zementzusatzstoff verwendet werden. Die flüssige Phase enthält die Lithiumionen als Lithiumsulfat und kann weiter aufgereinigt werden.

In einigen Ausführungsformen der Erfindung muss das Lithiumerz noch vorbereitet werden. Hierzu gehören insbesondere eine Zerkleinerung und/oder eine Temperaturbehandlung, typischerweise oberhalb von 1000 °C. Insoweit unterscheidet sich die Erzaufbereitung nicht von anderen Verfahren. Das Aufheizen kann mit beliebigen Energiequellen erfolgen; dieser Schritt wird auch als Rösten bezeichnet. Als Energiequelle eignen sich Erdgas, Flüssiggas, Wasserstoff, Ammoniak, Sekundärbrennstoffe und alle weiteren bekannten Energiequellen.

Die Wärme des gerösteten Erzes kann auch genutzt werden, um die Schwefelsäure auf die notwendige Temperatur zu erhitzen.

Die Konzentration der Schwefelsäure liegt bevorzugt im Bereich >12 Mol/l, bevorzugt >15 Mol/l (gemessen bei 25 °C). Durch die Erhitzung auf 200 und 330 °C ändert sich das Volumen, was die Säurekonzentration verändert. Typisch ist die Verwendung von konzentrierter Schwefelsäure mit einer Konzentration von etwa 96%-98%.

Erfindungsgemäß wird vor dem Schritt d) noch nicht neutralisiert und insbesondere nicht mit Calciumsalzen, wie Calciumcarbonaten oder Calciumhydroxid, neutralisiert. Neutralisiert bedeutet insbesondere, dass der pH-Wert nicht in den Bereich > pH 6 gebracht wird. Bevorzugt bleibt der pH-Wert <1.

Zur Abtrennung von Fest- und Flüssigphasen eignet sich beispielsweise eine Filtration. Grundsätzlich können alle Verfahren angewandt werden, die auch in einem klassischen Verfahren nach der Neutralisation mit Calciumhydroxid oder Calciumcarbonat eingesetzt werden.

Der durch die Abtrennung erhaltene Feststoff wird typischerweise weiter gewaschen, getrocknet und dann in eine Zementmischung eingebracht. Optional kann er auch zerkleinert, beispielsweise gemahlen werden. In einigen Ausführungsformen wird erfolgt die Vermahlung zusammen mit Zementklinker aus der Zementherstellung.

Es ist grundsätzlich auch möglich, den erfindungsgemäßen Feststoff als Rohstoff zur Herstellung von Zementklinker einzusetzen. Gegenstand der Erfindung ist daher grundsätzlich auch die Verwendung des erfindungsgemäßen Feststoffs als Ausgangsmaterial zur Zementherstellung.

Gegenstand der Erfindung ist auch der Zementzusatzstoff, der durch das erfindungsgemäße Verfahren erhältlich ist. Dieser Zementzusatzstoff hat typischerweise, bezogen auf die Trockenmasse, Calciumgehalte von <2 MA.-%, bevorzugt < 1 MA.-%, gemessen als CaO und Schwefelgehalte von < 1 MA.-%, gemessen als SO₃.

Beispielsweise bedeutet eine Angabe von 0,9 MA.-% CaO, dass 0,643 MA.-% Ca in der Probe enthalten sind, die messtechnisch als CaO bestimmt wurden.

Aufgrund seiner Gewinnung aus Lithiumerzen weist er noch Lithiumgehalte auf. Typisch sind Lithiumgehalte > 0,01 MA.-% (100 ppm). In vielen Fällen wird der Gehalt an Lithium mehr als 1.000 ppm betragen. Ziel ist es natürlich, möglichst geringe Lithiumgehalte zu erzielen, damit dieses im Stoffstrom zur Lithiumgewinnung verbleibt. Bevorzugt liegt der Lithiumgehalt < 0,5 MA.-%, bevorzugt < 0,2 MA.-% oder < 0,1 MA.-%.

Bevorzugt liegt die Hydrationswärme bei mindestens 350 J/g bei einer Hydrationszeit von 160 Stunden.

Bevorzugt beträgt der Aktivitätsindex nach DIN EN 450-1 ≥ 100 % nach 28 Tagen und ≥ 100 % nach 91 Tagen.

Der Zementzusatzstoff kann vor seiner Verwendung auch einer Qualitätskontrolle unterzeigen werden und - wenn die Eigenschaften nicht den Zielwerten entsprechen - anders verwertet oder verworfen werden.

Gegenstand der Erfindung ist auch ein Verfahren zur Herstellung einer Betonmischung oder einer Zementmischung umfassend
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Einbringen der Festphase als Zementzusatzstoff in einen Beton oder einen Zement.

Ein weiterer Gegenstand der Erfindung ist eine Zementmischung, die den erfindungsgemäßen Zementzusatzstoff enthält.

In der erfindungsgemäßen Zementmischung beträgt die Menge an erfindungsgemäßem Zementzusatzstoff typischerweise 1 bis 50 MA.-%, mehr bevorzugt 6 bis 35 MA.-% oder 6 bis 18 MA.-%. In kleinen Mengen eingesetzt (≤5 MA.-%) wäre die übliche Bezeichnung Zusatzmittel statt Zusatzstoff.

Gegenstand der Erfindung ist auch die Verwendung dieses Zementzusatzstoffs als Zusatzstoff zum Zement.

In einer Ausführungsform wird der Zementzusatzstoff nicht in einen Zement gegeben, sondern erst dem Beton zugesetzt.

Eine Ausführungsform ist die Verwendung des Zementzusatzstoffs zur Erhöhung der Betondruckfestigkeit.

MA.-% bedeutet Masseanteil in Prozent. Alle Volumenangaben beziehen sich auf 25 °C, soweit nicht anders angegeben.

Die Erfindung wird durch die folgenden Beispiele näher erläutert:

### Beispiel 1 - Proben

Es wurden verschiedene Lithiumerzproben nach der klassischen Behandlung des Brechens, Mahlens, Hitzebehandlung und Laugung mit konzentrierter Schwefelsäure bei 250 und 300 °C aus verschiedenen Vorkommen untersucht. Dabei wurden die Proben aus der Laugung entnommen, mit Wasser verdünnt, und ein Feststoff abfiltriert. Dieser wurde getrocknet und gebrochen.
Probe A: Westaustralien, Altura Mine
Probe B: China, Tianqui Mine
Probe C: Westaustralien, Galaxy Mine

Die chemische Zusammensetzung der Proben ist in der folgenden Tabelle 1 dargestellt:

**Tabelle 1**

| **Lagerstätte** | | **Chemische Zusammensetzung der Proben** | | | | | | | |
|---|---|---|---|---|---|---|---|---|---|
| | | **GV** | **SiO₂** | **Al₂O₃** | **SO₃** | **CaO** | **Fe₂O₃** | **K₂O** | **Andere** |
| **Altura** | MA.-% | 4,5 | 65,6 | 25,9 | 0,4 | 0,8 | 1,3 | 0,5 | 1,0 |
| **Tianqui** | MA.-% | 4,3 | 66,8 | 26,5 | 0,3 | 0,3 | 0,8 | 0,4 | 0,6 |
| **Galaxy** | MA.-% | 4,4 | 65,5 | 26,6 | 0,3 | 0,5 | 1,2 | 0,5 | 1,1 |

Die Proben A, B und C weisen einen mittlere Partikelgröße im Bereich von d50 = 30 bis 60 µm auf. d50 ist der Wert bei dem 50 Volumenprozent der Partikel eine kleinere und 50 Volumenprozent der Partikel eine größere Korngröße aufweisen.

Für die nachfolgenden Beispiele wurden die Proben auf eine Restfeuchte von <1% (bei 105 °C) getrocknet.

### Beispiel 2 - Untersuchung der chemischen Eigenschaften

Für Zementzusatzstoffe werden in DIN EN 197-1:2011-11 Hauptbestandteile geregelt. Für Puzzolane wird nach dieser Norm ein Mindestgehalt an reaktivem Siliziumdioxid von 25,0% gefordert. Alle drei untersuchten Proben zeigten ein reaktives Siliciumdioxid von ungefähr 55 %.

Die Reaktivität, ausgedrückt als Reaktionswärme, eines puzzolanischen Zementzusatzstoffs sollte nach ASTM C1897-20 > 100 J/g liegen.

Die Reaktionswärme der erfindungsgemäßen Proben betrug bei einer Hydrationszeit von 160 Stunden etwa 480 J/g. Im Vergleich dazu erreicht Flugasche typischerweise 270 bis 280 J/g.

Alle drei untersuchten Proben zeigten ein reaktives Siliciumdioxid von ungefähr 55 %.

Die spezifische Oberfläche N₂-BET betrug 8,5 m²/g.

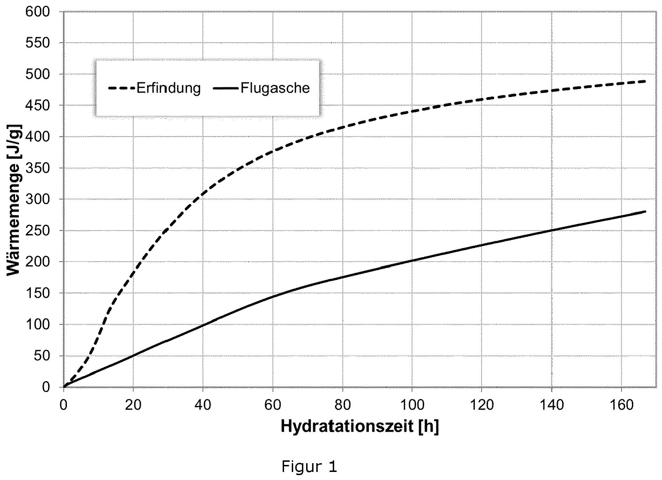

Ein Reaktivitätstest nach ASTM C1897-20 ist als Figur 1 beigefügt. Das erfindungsgemäße Material ist Probe A.

### Beispiel 3: Aktivitätsindex

Auch Hüttensandmehl und Flugaschen werden als Zementzusatzstoff eingesetzt. Der Aktivitätsindex einer Flugasche soll nach DIN EN 450-1 ≥ 75 % nach 28 Tagen und ≥ 85 % nach 91 Tagen betragen. Im Vergleich zu Flugasche und Hüttensandmehl erreichte eine erfindungsgemäße Probe die in der Tabelle dargestellten Aktivitätsindizes.

Der Aktivitätsindex im Vergleich zu anderen typischen Zementzuschlägen wurde untersucht:

| **Probe** | **28 Tage** | **91 Tage** |
|---|---|---|
| Flugasche | 88,7 | 108,5 |
| Hüttensandmehl | 104,8 | 102,2 |
| Erfindungsgemäße Probe A | 101,2 | 109,0 |

### Beispiel 4: Betoneigenschaften

Die Betonkonsistenz nach DIN EN 1235-5 wurde untersucht. Dazu wurden folgende Proben hergestellt:
Probe 1: ein CEM II/A LL Zement mit 20 % Kalksteinmehl
Probe 2: ein CEM II/C-M(Q*-LL) Zement mit 25 % Probe A und 20 % Kalksteinmehl
Probe 3: ein CEM II/C-M(S-Q*-LL) mit 13 % Probe A, 12 % Hüttensandmehl und 20 % Kalksteinmehl
Probe 4: ein CEM II/A-LL mit etwa 15 % Kalksteinmehl

Q* im Namen des Produktes bezeichnet dabei den erfindungsgemäßen Zusatzstoff.

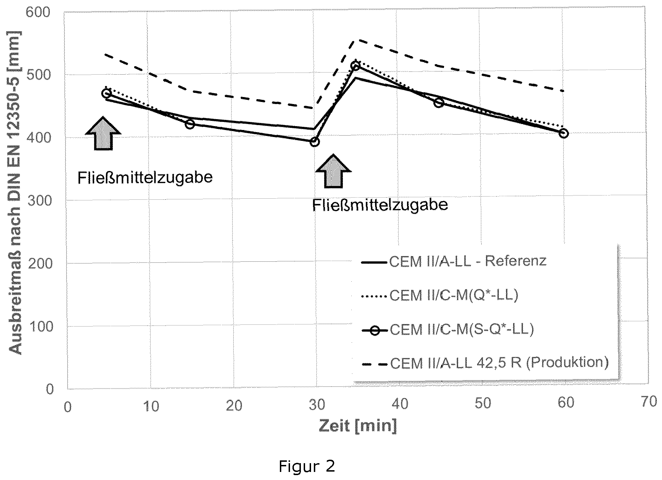

Das Ausbreitmaß ist in Figur 2 dargestellt. Die beiden Pfeile kennzeichnen den Zeitpunkt der Fließmittelzugabe.

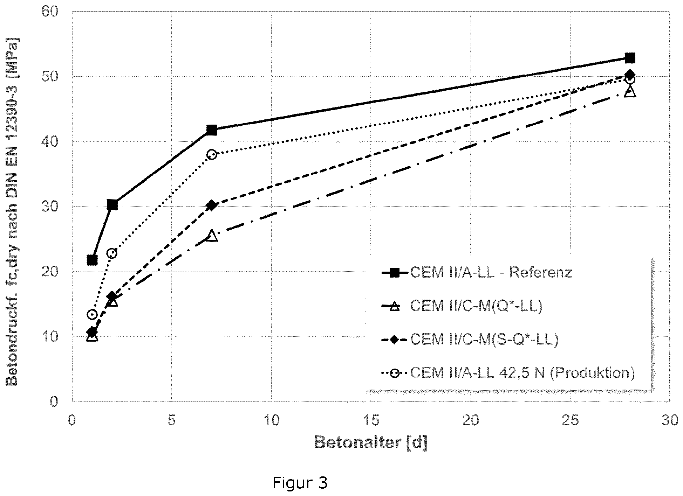

Die Entwicklung der Betondruckfestigkeit ist in Figur 3 dargestellt.

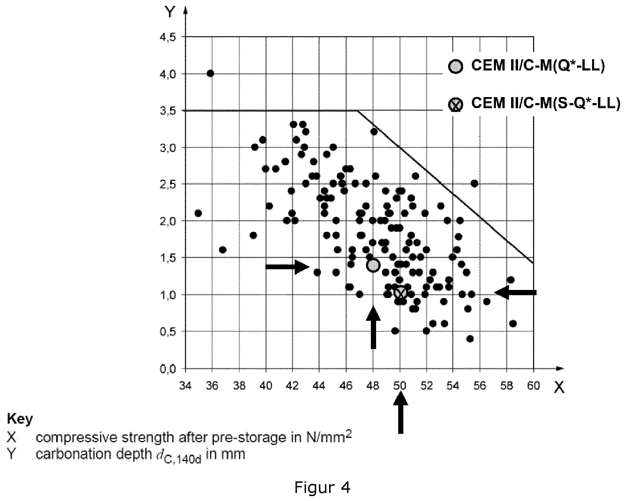

Weiterhin wurde die Carbonatisierungstiefe nach DIN/TR 16563:2014 gemessen. Die Ergebnisse sind in Figur 4 gezeigt

Es zeigt sich, dass die erfindungsgemäßen Proben hervorragende Eigenschaften als Zementzusatzstoff haben, die die Qualität von Hüttensandmehl erreichen und damit besser sind als Flugaschen.

## Patentansprüche

1. Verfahren zur Herstellung eines Zementzusatzstoffs umfassend die Schritte:
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Bereitstellen der Festphase als Zementzusatzstoff.

2. Verfahren nach Anspruch 1, wobei das Lithiumerz Spodumen, Petalit, Zinnwaldit, Lepidolith oder Mischungen davon umfasst.

3. Verfahren nach Anspruch 1 oder 2, wobei
(i) das Lithiumerz einer Temperaturbehandlung oberhalb von 1000 °C unterzogen wurde,
(ii) das Lithiumerz vor der Temperaturbehandlung einer Zerkleinerung unterzogen wurde und/oder
(iii) wobei die konzentrierte Schwefelsäure eine Konzentration von > 12 mol/l bei 25 °C aufweist.

4. Verfahren nach einem der Ansprüche 1 bis 3, wobei vor Schritt d) nicht neutralisiert wurde, insbesondere nicht mit Calciumsalzen.

5. Verfahren nach einem der Ansprüche 1 bis 4, wobei das Trennen durch Filtration erfolgt.

6. Verfahren nach einem der Ansprüche 1 bis 5, wobei das Bereitstellen der Festphase als Zementzusatzstoff folgende Schritte umfasst:
i) Waschen des Feststoffs
ii) Trocknen des Feststoffs
iii) optional Zerkleinern des Feststoffs
iv) Einbringen des Feststoffs in eine Zementmischung oder einen Beton.

7. Zementzusatzstoff, erhältlich durch das Verfahren gemäß einem der Ansprüche 1 bis 6, insbesondere mit Gehalten an:
Calcium, gemessen als CaO < 1 MA.-%
Schwefel, gemessen als SO₃ < 1 MA.-%
Lithium, gemessen als Lithium > 0,01 Gew-%.

8. Zementzusatzstoff nach Anspruch 7, wobei die Hydrationswärme bei mindestens 350 J/g bei einer Hydrationszeit von 160 Stunden liegt.

9. Zementzusatzstoff nach einem der Ansprüche 7 oder 8, wobei der Aktivitätsindex nach DIN EN 450-1 ≥ 100 % nach 28 Tagen und ≥ 100 % nach 91 Tagen beträgt.

10. Verfahren zur Herstellung einer Betonmischung oder einer Zementmischung umfassend
a) Bereitstellen eines Lithiumerzes
b) Umsetzen des Lithiumerzes mit konzentrierter Schwefelsäure bei Temperaturen zwischen 200 und 330 °C
c) Zugabe von Wasser, um eine Suspension zu erhalten
d) Trennen der Suspension in eine Festphase und eine Flüssigphase
e) Einbringen der Festphase als Zementzusatzstoff in einen Beton oder einen Zement.

11. Zementmischung, enthaltend den Zementzusatzstoff nach einem der Ansprüche 7 bis 9, vorzugsweise wobei die Menge an dem Zementzusatzstoff 1-50 MA.-% beträgt.

12. Verwendung des Zementzusatzstoffs nach Ansprüche 7 bis 9 als Zusatzstoff zu Zement oder zu Beton.

13. Verwendung des Zementzusatzstoffs nach Ansprüche 7 bis 9 als Zusatzstoff zu Beton.

14. Zementzusatzstoffmischung, enthaltend den Zementzusatzstoff nach Ansprüche 7 bis 9 und Kalksteinmehl, insbesondere enthaltend den Zementzusatzstoff und Kalksteinmehl im Verhältnis 2:1 bis 1:3.

15. Zementzusatzstoffmischung nach Anspruch 14 enthaltend zusätzlich Flugasche.
